# EUROPEAN PATENT SPECIFICATION

(11) **EP 0 838 004 B1**
(45) Date of publication and mention of the grant of the patent: **30.01.2002**
(21) Application number: 96924052.2
(22) Date of filing: 12.07.1996
(51) Int. Cl.: F16K 5/20

(54) **VALVES**
VENTILE
ROBINETS D'ARRET

(30) Priority: 19.07.1995 GB 9514789
(43) Date of publication of application: 29.04.1998
(73) Proprietor: Brookes, George, Old Glossop, Derbyshire SK13 9SD (GB)
(72) Inventor: Brookes, George, Old Glossop, Derbyshire SK13 9SD (GB)
(74) Representative: Allman, Peter John
(86) International application number: GB9601656
(87) International publication number: WO9704257

(56) References cited:
- DE-A- 1 813 309
- GB-A- 1 353 833
- GB-A- 2 163 530
- GB-A- 2 167 837
- US-A- 2 973 182

## Description

The present invention relates to valves, and in particular to valves which may be used in fuel gas distribution.

There is a demand for large volumes of isolation valves which may be manually operated to isolate a fuel gas supply main from a gas distribution network within for example domestic premises. Such valves are used to isolate premises from the gas main for example when the premises are unoccupied, or when a leak has been detected within the premises. Given the large number of valves required and the importance of their function from the point of view of safety it is essential that such valves are both cheap to produce and highly reliable.

Conventional gas isolation valves have a metal body defining a tapered bore into which a tapered spindle is inserted, a transverse bore being formed through the spindle. When the bore is aligned with inlet and outlet ports in the body the valve is open, rotation of the spindle through 90° moving the bore to a position in which it is isolated from both the inlet and outlets. Grease is applied to the mating faces of the spindle and valve body and as a result a substantially gas-tight seal is formed between them. Such a valve design has been used satisfactorily for many years, but the design demands accurate machining of the component parts and this is difficult to achieve economically. Furthermore, given that isolation valves are rarely operated, such that years may elapse during which the spindle and body do not move relative to each other, and given the interference fit between the spindle and body, considerable force may be needed to move the spindle relative to the body on those rare occasions when the valve has to be opened or closed. This means that the shaft and body must be relatively robust components, and hence relatively expensive in terms of materials.

Ball valves sealed with O-rings can be manufactured relatively cheaply. Many designs of such valves are available, for example that described in British Patent No. 2242963. A common feature of most such designs is a body defining a through bore, an aperture extending through a wall of the body and receiving a valve spindle, and a ball located within the passageway and coupled to the spindle. The ball defines a through bore which may be positioned so that it is either aligned with the passageway or transverse to the passageway. At least one O-ring is located within the passageway so as to define a seal with the ball, and an O-ring is located between the spindle and the body to prevent leakage from the passageway. Such valves are cheap to produce, and relatively small versions of such valves have been widely used to control the supply of gas to individual appliances. There has been a reluctance to use such valves for mains isolation however, primarily because they are not fire proof.

In the event of a ball valve of the above design being exposed to heat from a fire, the O-rings are destroyed. The valve then leaks, even when the valve is closed, making it impossible for premises in which a fire is burning to be reliably isolated from the gas main. Thus gas distributors are reluctant to use simple ball valves for mains isolation unless they are associated with back-up valves which automatically and reliably isolate the main in the event of a fire.

A feature of ball valves used for gas mains isolation is that they must be robust so as to be able to survive mechanical abuse, for example as a result of being closed in haste with an inappropriate tool. There must be little risk of the spindle shearing, or of the spindle being decoupled from the ball. The objectives of achieving a design which is cheap to produce and yet is sufficiently strong that the spindle and ball cannot be accidentally decoupled are difficult to reconcile.

GB-A-2135431 discloses a ball valve having a spring-biased sealing arrangement on both sides of the rotatable valve member. This valve structure is, however, too complex and expensive for use in small diameter gas distribution systems within, for example, domestic premises.

The present invention has the objective of providing valves which are suitable for use as gas main isolators and in particular such valves which perform in a safe manner even if exposed to high temperatures.

According to the present invention, there is provided a ball valve comprising a housing which defines a passageway, a ball valve member located within the passageway, a spindle extending through an opening in the housing from the valve member, and two resilient seals arranged between the valve member and the housing, the valve member defining a bore therethrough and being rotatable by the spindle between a valve open position in which the bore communicates with the passageway on opposite sides of the valve member and a valve closed position in which the bore is isolated from the passageway on both sides of the valve member, wherein one seal comprises a resilient O-ring interposed between the valve member and an annular member which is spring biased towards the valve member, the annular member being arranged such that in the absence of the O-ring it is biased against the valve member to cause a seal to be formed between the housing and the valve member, and the other seal comprises a further O-ring associated with a fixed sealing surface, the valve member being displaceable within the passageway such that in the absence of the further O-ring the valve member is pressed against the fixed sealing surface by the spring bias applied to the annular member of the said one seal.

The annular member may comprise a tubular portion projecting from a flange, the free end of the tubular portion being chamfered to define a frustoconical sealing surface adjacent the ball, and the O-ring being arranged in a recess provided around the tubular portion of the annular member. The spring bias may be applied to the annular member by a deformable spring washer located between the valve housing and the annular member.

The spindle may have a portion of square section, and the housing may define an abutment surface which co-operates with a cut-out in the square section spindle to limit the rotational movement of the spindle.

The valve member and spindle may be interengaged by a dovetail joint such that the joint may be disengaged by separating the main body and insert and moving the valve member out of the main body through the passageway.

Any convenient form of dovetail interengagement may be provided. For example a conventional tapered dovetail may be used in which the ball defines a slot which is of uniform cross-section along its length and which increases in width with depth, and the spindle may define a projection which is a sliding fit in the tapered slot.

A heat-activated isolation valve may be provided in addition to the ball valve, the heat-activated isolation valve comprising a body defining a passageway between an inlet and an outlet, a sealing surface defined by the body, a valve member supported within the passageway adjacent the sealing surface and moveable between a first valve open position spaced from the sealing surface and a second valve closed position in contact with the sealing surface, a spring-biased over centre mechanism extending across the passageway and arranged to bias the valve member to either the first or the second position, and a bimetallic strip extending across the passageway adjacent the over centre mechanism, the bimetallic strip being arranged to move the valve member to the second position if the temperature exceeds a predetermined limit.

The over centre mechanism may comprise a leaf spring engaging a groove at opposite sides of the passageway, the bimetallic strip extending alongside the leaf spring such that the leaf spring is deformed to a configuration in which the valve member is forced to the second position when the bimetallic strip is heated to the said predetermined temperature.

The leaf spring may be in two halves, each half engaging the groove at one end and a slot in the valve member at the other end.

Embodiments of the present invention will now be described, by way of example, with reference to the accompanying drawings, in which:
Figure 1 is a sectional view of a first embodiment of the present invention;
Figure 2 is a view on the line 2-2 of Figure 1, Figure 2 indicating the section shown in Figure 1 on the line 1-1;
Figure 3 is an exploded view of components shown in Figure 1;
Figure 4 schematically illustrates the interrelationship between a valve housing and a ball valve and spindle structure of the embodiment of Figures 1 and 2;
Figure 5 is a view on the line 5-5 of Figure 4;
Figure 6 is a view on the line 6-6 of Figure 5;
Figure 7 is a view on the line 7-7 of Figure 6;
Fig. 8 illustrates an alternative housing structure to that shown in Fig. 1;
Figures 9, 10 and 11 illustrate a thermally activated isolation valve structure which may be used in association with the ball valve of Figures 1 and 2, Figure 9 showing the valve open and Figure 10 showing the valve closed.

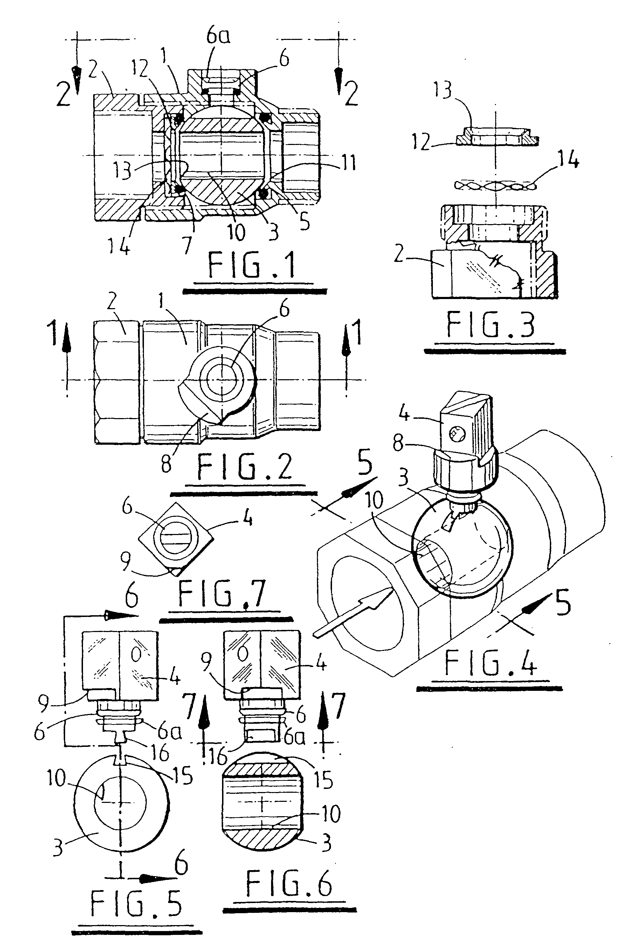

Referring to Figures 1 to 7, the illustrated structure comprises a housing formed by a main body 1 and an insert 2. The housing defines a passageway in which a ball valve member 3 is located, the ball valve member being retained between the main body and the insert. A spindle 4 extends through an opening in a side wall of the main body and engages the ball 3. A first O-ring 5 is located between the ball and the main body 1, a second O-ring 6 is arranged around the spindle 4, and the third O-ring 7 is arranged between the ball and the insert 2. A cupped washer 6a is also arranged around the spindle, the cupped washer being an interference fit on the spindle 4 and an interference fit within the bore in the main body through which the spindle 4 extends. The upper portion of the main body defines a projection 8 which co-operates with a cut out 9 on the spindle to limit rotational movement of the spindle to 90°, positioning the spindle at one extreme of its freedom of movement resulting in the ball adopting the position shown in Figure 1 in which a through bore 10 defined by the ball is aligned with the passageway through the main body. Rotating the ball through 90° from the position shown in Figure 1 results in the bore being wholly located between the seals 5 and 7.

The O-ring 5 is received in an annular recess defined around a tubular extension of the main body extending towards the ball. This tubular extension terminates in a frustoconical sealing surface 11. The O-ring 5 ensures that the ball is held in a position in which it does not contact the sealing surface 11. In a similar manner, the O-ring 7 is supported on an annular member 12 which defines a flange from which a tubular chamfered extension projects, the tubular extension defining a frustoconical annular sealing surface 13. The O-ring 7 ensures that the surface 13 is held a short distance away from the surface of the ball 3. The annular member 12 is received within the insert 2 so as to be a reasonably tight sliding fit therein, a spring washer 14 being located between the insert 2 and the annular member 12. Thus the spring washer applies a force to the annular member 12 which causes it to move towards the ball as far as it is able to given the interposition of the O-ring 7 between the annular member 12 and the ball.

In the event of the illustrated valve being exposed to a fire, the resilient O-rings 5, 6 and 7 will be destroyed. When this occurs the biasing force generated by the spring washer 14 pushes the annular member 12 against the surface of the ball 3 and in turn pushes the ball against the sealing surface 11. The cupped washer 6a remains in position between the spindle 4 and the main body. Thus even though the O-rings have been destroyed and therefore provide no sealing function gas cannot escape from the valve assembly except for very limited leakage which may occur between the metal-to-metal seals defined by the ball 3 and the sealing surfaces 11 and 13 with which it is in contact, and the metal-to-metal seals defined between the washer 6a and the spindle and main body. Thus the valve will have a minimal leakage rate in the event of its exposure to very high temperatures.

The spring washer 14 may be of any suitable type. For example, as shown in Figure 1, the spring washer may be corrugated in the circumferential direction such that when compressed the height of the corrugations is reduced. Alternatively, the spring washer may be frustoconical for example.

It is important that the spindle 4 and ball 3 are securely interengaged. This is achieved by arranging for the ball 3 to have a slot 15 formed therein into which a dovetailed tongue 16 is inserted. The slot 15 is of substantially uniform cross-section but of increasing width with depth and the tapered tongue 16 is shaped to be a close sliding fit in that slot. The valve can be simply assembled by removing the insert 2 from the main body 1, inserting the spindle through the aperture in the side wall of the main body and arranging the tongue 16 so that it extends axially, pushing the ball 3 into the open end of the main body so that the slot 15 is aligned with and slides over the tongue 16, and then replacing the insert in the main body. Thus it will be appreciated that the various components can be easily interconnected and yet an extremely strong interengagement between the spindle and ball is achieved.

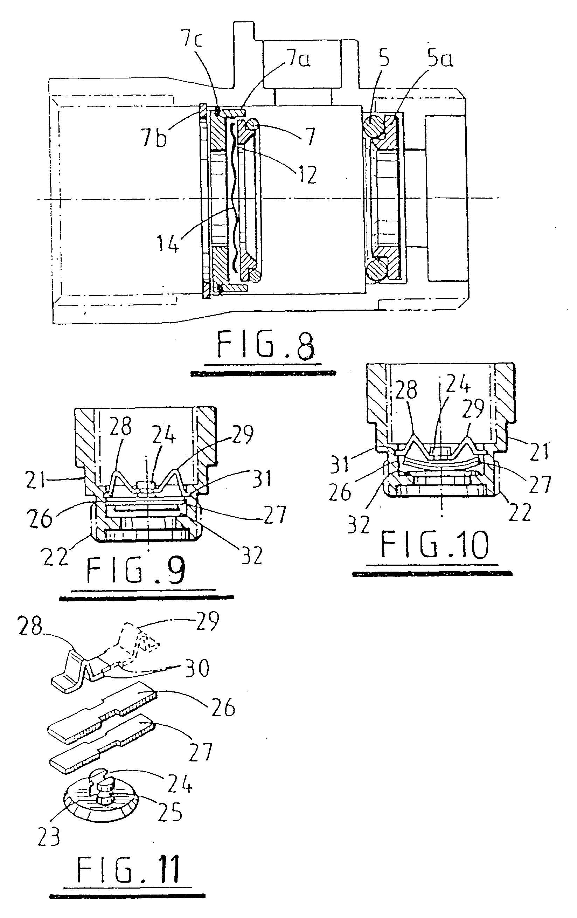

Fig. 8 illustrates an alternative housing to that of the embodiment of Fig. 1. In the arrangement of Fig. 8, the O-ring 5 is retained on a carrier 5a rather than being supported on a groove machined into the housing, and the O-ring 7, annular member 12 and spring washer 14 are retained on a carrier ring 7a rather than being retained in an insert 2. The carrier ring 7a is retained in the one-piece housing by a circlip 7b, and an additional O-ring 7c may be provided to prevent any slight leakage around the carrier ring 7a bypassing the O-ring 7. The structure of Fig. 8 is easier to manufacture cheaply than that of Fig. 1.

In some applications it will be desirable to provide a heat-activated isolation valve in association with the ball valve which will not only enable the isolation valve to be closed in a gas-tight manner if the valve is exposed to high temperatures but will in addition automatically close the valve even if the ball 3 remains in the open position as shown in Figure 1. A suitable heat-activated isolation valve is illustrated in Figures 9, 10 and 11 and comprises a body 21 a threaded end 22 of which is intended to be screwed into the main body 1 shown in Figure 1 in place of the insert 2. A heat-activated valve assembly is supported within the body, that assembly comprising a valve member 23 supporting a cylindrical on-axis post in which an axial slot 24 and a circumferential slot 25 have been formed, two bimetallic strips 26 and 27 each of which has a central portion of reduced width to enable it to be inserted in the axial slot 24, and two leaf springs 28 and 29 the abutting ends of which are of reduced width to enable them to be positioned within the axial slot 24. Shoulders 30 are defined as a result of the reduced width of the end portions of the leaf springs and those shoulders engage in the circumferential slot 25.

Figure 9 shows the assembly in the valve open position. It will be seen that the radially outer ends of the springs 28 and 29 are received in a groove 31 formed in the inner wall of the body 21, the lengths of the springs 28 and 29 in their unstressed condition being slightly greater than the radius of the base of the groove 31. Thus the springs 28 and 29 act as an over-centre mechanism such that the valve member 23 is either biased to the position shown in Figure 9 or biased to the closed position as shown in Figure 10. The bimetallic strips in the valve open configuration shown in Figure 9 bear against the undersides of the springs 28 and 29 and thus prevent the valve member becoming detached from the body 21. When the bimetallic strips 26 and 27 are heated however they bend to the configuration shown in Figure 10 and in so doing push the valve member towards the sealing surface 32 defined by the body 21 until the springs 28 and 29 are just beyond the position in which the radially inner ends of the springs are located in the same plane as the radially outer ends of the springs. The mechanism then snaps to the closed configuration as shown in Figure 10.

One advantage of the illustrated heat-activated isolation valve as described in Figures 9 to 11 is that the valve can be readily tested and thereafter simply reset by pushing the valve member 23 away from the sealing surface 32.

In the structure illustrated in Figures 9 to 11, two bimetallic strips are used. It will of course be appreciated that if appropriate bimetallic materials are available it would be preferable to use a single bimetallic strip.

The heat-activated isolation valve structure of Figures 9 to 11 is intended for fitting into an associated component such as the ball valve of Figures 1 and 2.

## Claims

1. A ball valve comprising a housing (1,2) which defines a passageway, a ball valve member (3) located within the passageway, a spindle (4) extending through an opening in the housing from the valve member (3), and two resilient seals arranged between the valve member (3) and the housing, the valve member (3) defining a bore (10) therethrough and being rotatable by the spindle (4) between a valve open position in which the bore communicates with the passageway on opposite sides of the valve member (3) and a valve closed position in which the bore is isolated from the passageway on both sides of the valve member, **characterised in that** one seal comprises a resilient O-ring (7) interposed between the valve member and an annular member (12) which is spring biased towards the valve member (3), the annular member (12) being arranged such that in the absence of the O-ring (7) it is biased against the valve member (3) to cause a seal to be formed between the housing (1,2) and the valve member (3), and the other seal comprises a further O-ring (5) associated with a fixed sealing surface (11), the valve member (3) being displaceable within the passageway such that in the absence of the further O-ring (5) the valve member (3) is pressed against the fixed sealing surface (11) by the spring bias applied to the annular member (12) of the said one seal.

2. A ball valve according to claim 1, wherein the annular member (12) comprises a tubular portion projecting from a flange, the free end of the tubular portion being chamfered to define a frustoconical sealing surface (13) adapted to form a seal with the ball, and the O-ring (7) being arranged in a recess provided around the tubular portion of the annular member (12).

3. A ball valve according to claim 1 or 2, wherein the spring bias is applied to the annular member (12) by a deformable spring washer (14) located between the housing (1,2) and the annular member (12).

4. A ball valve according to any preceding claim, wherein the spindle (4) has a portion of square section, and the housing (1,2) defines an abutment surface which co-operates with a cut-out (9) in the square section spindle (4) to limit the rotational movement of the spindle (4).

5. A ball valve according to any preceding claim, wherein the valve member (3) and spindle (4) are interengaged by a dovetail joint (15,16) such that the joint may be disengaged by separating a main body (1) and insert (2) of the housing and moving the valve member (3) out of the main body (1) through the passageway.

6. A ball valve according to claim 5, wherein the ball (3) defines a slot (15) which is of uniform cross-section along its length and which increases in width with depth, and the spindle (4) defines a projection (16) which is a sliding fit in the slot (15).

7. A valve assembly comprising a ball valve according to any preceding claim and a heat-activated isolation valve comprising a body (21) defining a passageway between an inlet and an outlet, a sealing surface defined by the body, a valve member (23) supported within the passageway adjacent the sealing surface and moveable between a first valve open position spaced from the sealing surface and a second valve closed position in contact with the sealing surface, a spring-biased over centre mechanism (28,29) extending across the passageway and arranged to bias the valve member (23) to either the first or the second position, and a bimetallic strip (26,27) extending across the passageway adjacent the over centre mechanism (28,29), the bimetallic strip (26,29) being arranged to move the valve member (23) to the second position if the temperature exceeds a predetermined limit.

8. A valve assembly according to claim 7, wherein the over centre mechanism (28,29) of the isolation valve comprises a leaf spring engaging a groove (31) at opposite sides of the passageway, the bimetallic strip (26,27) extending alongside the leaf spring such that the leaf spring is deformed to a configuration in which the valve member (23) is forced to the second position when the bimetallic strip (26,27) is heated to the said predetermined temperature.

9. A valve assembly according to claim 8, wherein the leaf spring (28,29) (31) is in two halves, each half engaging the groove at one end and a slot in the valve member (23) at the other end.

## Patentansprüche

1. Kugelventil, das aufweist: ein Gehäuse (1, 2), das einen Durchgang definiert; ein Kugelventilelement (3), das innerhalb des Durchganges angeordnet ist; eine Spindel (4), die sich durch eine Öffnung im Gehäuse vom Ventilelement (3) aus erstreckt; und zwei elastische Dichtungen, die zwischen dem Ventilelement (3) und dem Gehäuse angeordnet sind, wobei das Ventilelement (3) eine Bohrung (10) dort hindurch definiert und durch die Spindel (4) zwischen einer offenen Position des Ventils, in der die Bohrung mit dem Durchgang auf gegenüberliegenden Seiten des Ventilelementes (3) in Verbindung steht, und einer geschlossenen Position des Ventils drehbar ist, in der die Bohrung vom Durchgang auf beiden Seiten des Ventilelementes abgesperrt ist, **dadurch gekennzeichnet, daß** eine Dichtung einen elastischen Runddichtring (7) aufweist, der zwischen dem Ventilelement und einem Ringelement (12) angeordnet ist, das zum Ventilelement (3) hin mittels Feder vorgespannt wird, wobei das Ringelement (12) so angeordnet ist, daß es bei Nichtvorhandensein des Runddichtringes (7) gegen das Ventilelement (3) vorgespannt wird, um zu bewirken, daß eine Dichtung zwischen dem Gehäuse (1, 2) und dem Ventilelement (3) gebildet wird; und daß die andere Dichtung einen weiteren Runddichtring (5) aufweist, der mit einer stationären Dichtungsfläche (11) verbunden ist, wobei das Ventilelement (3) innerhalb des Durchganges so verschiebbar ist, daß bei Nichtvorhandensein des weiteren Runddichtringes (5) das Ventilelement (3) gegen die stationäre Dichtungsfläche (11) durch die Federvorspannung gepreßt wird, die auf das Ringelement (12) der einen Dichtung angewandt wird.

2. Kugelventil nach Anspruch 1, bei dem das Ringelement (12) einen rohrförmigen Abschnitt aufweist, der aus einem Flansch vorsteht, wobei das freie Ende des rohrförmigen Abschnittes abgefast ist, um eine kegelstumpfförmige Dichtungsfläche (13) zu definieren, die so angepaßt ist, daß eine Dichtung mit der Kugel gebildet wird, und wobei der Runddichtring (7) in einer Aussparung angeordnet ist, die um den rohrförmigen Abschnitt des Ringelementes (12) herum vorhanden ist.

3. Kugelventil nach Anspruch 1 oder 2, bei dem die Federvorspannung auf das Ringelement (12) durch eine verformbare Federunterlegscheibe (14) angewandt wird, die zwischen dem Gehäuse (1, 2) und dem Ringelement (12) angeordnet ist.

4. Kugelventil nach vorhergehenden Ansprüchen, bei dem die Spindel (4) einen Abschnitt mit quadratischem Querschnitt aufweist und das Gehäuse (1, 2) eine Widerlagerfläche definiert, die mit einer Aussparung (9) im quadratischen Abschnitt der Spindel (4) zusammenwirkt, um die Drehbewegung der Spindel (4) zu begrenzen.

5. Kugelventil nach vorhergehenden Ansprüchen, bei dem das Ventilelement (3) und die Spindel (4) mittels einer Schwalbenschwanzverbindung (15, 16) so miteinander in Eingriff kommen, daß die Verbindung durch Trennen eines Hauptkörpers (1) und eines Einsatzes (2) des Gehäuses und Herausbewegen des Ventilelementes (3) aus dem Hauptkörper (1) durch den Durchgang außer Eingriff gebracht werden kann.

6. Kugelventil nach Anspruch 5, bei dem die Kugel (3) einen Schlitz (15) definiert, der längs seiner Länge einen gleichförmigen Querschnitt aufweist, und der in der Breite mit der Tiefe größer wird, und bei dem die Spindel (4) einen Vorsprung (16) definiert, der im Schlitz (15) einen Gleitsitz aufweist.

7. Ventilbaugruppe, die ein Kugelventil nach vorhergehenden Ansprüchen und ein wärmeaktiviertes Absperrventil aufweist, das aufweist: einen Körper (21), der einen Durchgang zwischen einem Eintritt und einem Austritt definiert; eine Dichtungsfläche, die durch den Körper definiert wird; ein Ventilelement (23), das innerhalb des Durchganges angrenzend an die Dichtungsfläche gehalten wird und zwischen einer ersten offenen Position des Ventils, die einen Abstand von der Dichtungsfläche aufweist, und einer zweiten geschlossenen Position des Ventils in Berührung mit der Dichtungsfläche beweglich ist, wobei sich ein mittels Feder vorgespannter Sprungwerk-Mechanismus (28, 29) über den Durchgang erstreckt und angeordnet ist, um das Ventilelement (23) in entweder die erste oder die zweite Position vorzuspannen, und wobei sich ein Bimetallstreifen (26, 27) über den Durchgang angrenzend an den Sprungwerk-Mechanismus (28, 29) erstreckt, wobei der Bimetallstreifen (26, 27) angeordnet ist, um das Ventilelement (23) in die zweite Position zu bewegen, wenn die Temperatur eine vorgegebene Grenze übersteigt.

8. Ventilbaugruppe nach Anspruch 7, bei der der Sprungwerk-Mechanismus (28, 29) des Absperrventils eine Blattfeder aufweist, die in einer Nut (31) auf gegenüberliegenden Seiten des Durchganges in Eingriff kommt, wobei sich der Bimetallstreifen (26, 27) längs der Blattfeder so erstreckt, daß die Blattfeder in eine Konfiguration, in der das Ventilelement (23) in die zweite Position gedrückt wird, verformt wird, wenn der Bimetallstreifen (26, 27) auf die vorgegebene Temperatur erwärmt wird.

9. Ventilbaugruppe nach Anspruch 8, bei der die Blattfeder (28, 29) (31) in zwei Hälften vorhanden ist, wobei jede Hälfte mit der Nut an einem Ende und einem Schlitz im Ventilelement (23) am anderen Ende in Eingriff kommt.

## Revendications

1. Robinet à tournant sphérique comprenant un logement (1, 2) définissant un passage, un élément de robinet à tournant sphérique (3) agencé dans le passage, un axe (4) s'étendant à travers une ouverture dans le logement à partir de l'élément de robinet (3) et deux joints élastiques agencés entre l'élément de robinet (3) et le logement, l'élément de robinet (3) définissant un alésage (10) le traversant et pouvant être tourné par l'axe (4) entre une position d'ouverture du robinet, dans laquelle l'alésage communique avec le passage sur les côtés opposés de l'élément de robinet (3), et une position de fermeture du robinet, dans laquelle l'alésage est isolé du passage sur les deux côtés de l'élément de robinet, **caractérisé en ce qu'**un joint comprend un joint torique d'étanchéité élastique (7) agencé entre l'élément de robinet et un élément annulaire (12) sollicité par un ressort en direction de l'élément de robinet (3), l'élément annulaire (12) étant agencé de sorte qu'en l'absence du joint torique d'étanchéité (7) il est sollicité contre l'élément de robinet (3) entraînant l'établissement d'un joint entre le logement (1, 2) et l'élément de robinet (3), l'autre joint comprenant un joint torique d'étanchéité additionnel (5) associé à une surface d'étanchéité fixe (11), l'élément de robinet (3) pouvant être déplacé dans le passage, de sorte qu'en l'absence du joint torique d'étanchéité additionnel (5), l'élément de robinet (3) est pressé contre la surface d'étanchéité fixe (11) par la sollicitation du ressort appliquée à l'élément annulaire (12) dudit un joint.

2. Robinet à tournant sphérique selon la revendication 1, dans lequel l'élément annulaire (12) comprend une partie tubulaire débordant d'une bride, l'extrémité libre de la partie tubulaire étant chanfreinée pour définir une surface d'étanchéité en tronc de cône (13) destinée à établir un joint avec le tournant sphérique, le joint torique d'étanchéité (7) étant agencé dans un évidement agencé autour de la partie tubulaire de l'élément annulaire (12).

3. Robinet à tournant sphérique selon les revendications 1 ou 2, dans lequel la sollicitation du ressort est appliquée à l'élément annulaire (12) par une rondelle à ressort déformable (14) agencée entre le logement (1, 2) et l'élément annulaire (12).

4. Robinet à tournant sphérique selon l'une quelconque des revendications précédentes, dans lequel l'axe (4) comporte une partie à section carrée, le logement (1, 2) définissant une surface de butée coopérant avec une entaille (9) dans l'axe à section carrée (4) pour limiter le déplacement par rotation de l'axe (4).

5. Robinet à tournant sphérique selon l'une quelconque des revendications précédentes, dans lequel l'élément de robinet (3) et l'axe (4) sont engagés mutuellement par un assemblage à queue d'aronde (15, 16), de sorte que l'assemblage peut être dégagé en séparant un corps principal (1) et un insert (2) du logement et en déplaçant l'élément de robinet (3) hors du corps principal (1) à travers le passage.

6. Robinet à tournant sphérique selon la revendication 5, dans lequel le tournant sphérique (3) définit une fente (15) ayant une section transversale uniforme le long de sa longueur et ayant une largeur accrue en fonction de la profondeur, l'axe (4) définissant une saillie (16) ajustée par glissement dans la fente (15).

7. Assemblage de robinet comprenant un robinet à tournant sphérique selon l'une quelconque des revendications précédentes, comportant un robinet d'isolement activé par la chaleur comprenant un corps (21) définissant un passage entre une entrée et une sortie, une surface d'étanchéité définie par le corps, un élément de robinet (23) supporté dans le passage près de la surface d'étanchéité et pouvant être déplacée entre une première position d'ouverture du robinet, espacée de la surface d'étanchéité, et une deuxième position de fermeture du robinet, en contact avec la surface d'étanchéité, un mécanisme à détente brusque sollicité par un ressort (28, 29) s'étendant à travers le passage et étant destiné à solliciter l'élément de robinet (23) pour le déplacer vers la première ou la deuxième position, et une bande bimétallique (26, 27) s'étendant à travers le passage près du mécanisme à détente brusque (28, 29), la bande bimétallique (26, 27) étant destinée à déplacer l'élément de robinet (23) vers la deuxième position lorsque la température dépasse une limite prédéterminée.

8. Assemblage de robinet selon la revendication 7, dans lequel le mécanisme à détente brusque (28, 29) du robinet d'isolement comprend un ressort à lames s'engageant dans une rainure (31) au niveau des côtés opposés du passage, la bande bimétallique (26, 27) s'étendant le long du ressort à lames, de sorte que le ressort à lames est déformé dans une configuration dans laquelle l'élément de robinet (23) est poussé vers la deuxième position lorsque la bande bimétallique (26, 27) est chauffée à ladite température prédéterminée.

9. Assemblage de robinet selon la revendication 8, dans lequel le ressort à lames (28, 29) (31) se compose de deux moitiés, chaque moitié s'engageant dans la rainure au niveau d'une extrémité et dans une fente dans l'élément de robinet (23) au niveau de l'autre extrémité.
